# EUROPÄISCHE PATENTSCHRIFT

(11) **EP 1 786 945 B1**
(45) Veröffentlichungstag und Bekanntmachung des Hinweises auf die Patenterteilung: **03.04.2013**
(21) Anmeldenummer: 05798053.4
(22) Anmeldetag: 08.09.2005
(51) Int. Cl.: B29C 59/14, C23C 14/48, C23C 14/02, C23C 14/20, G02B 1/12, G02B 5/00

(54) **VERFAHREN ZUR HERSTELLUNG EINES STRAHLUNGSABSORBIERENDEN OPTISCHEN ELEMENTS**
METHOD FOR PRODUCING A RADIATION-ABSORBING OPTICAL ELEMENT
PROCEDE DE FABRICATION D'UN ELEMENT OPTIQUE ABSORBANT LES RAYONNEMENTS

(30) Priorität: 10.09.2004 DE 102004043871
(43) Veröffentlichungstag der Anmeldung: 23.05.2007
(73) Patentinhaber: Fraunhofer-Gesellschaft zur Förderung der angewandten Forschung e.V., 80686 München (DE)
(72) Erfinder: KAISER, Norbert, 07745 Jena (DE); KALESS, Antje, 07743 Jena (DE); MUNZERT, Peter, 07743 Jena (DE); SCHELER, Michael, 07745 Jena (DE); SCHULZ, Ulrike, 07751 Kunitz (DE)
(74) Vertreter: Epping, Wilhelm
(86) Internationale Anmeldenummer: PCT/DE2005/001572
(87) Internationale Veröffentlichungsnummer: WO 2006/026975

(56) Entgegenhaltungen:
- WO-A-2004/092789
- WO-A1-2004/092789
- DE-A1- 10 241 708
- GB-A- 2 372 044
- US-A- 5 400 317
- PATENT ABSTRACTS OF JAPAN Bd. 017, Nr. 338 (P-1564), 25. Juni 1993 (1993-06-25) & JP 05 045503 A (KONICA CORP), 23. Februar 1993 (1993-02-23)
- FUJIKAWA S ET AL: "ANTIREFLECTION SURFACE MODIFICATION OF PLASTIC CR-39 BY MEANSSS OF 16O- AND 35CL-ION BOMBARDMENT" OPTIK, WISSENSCHAFTLICHE VERLAG GMBH.STUTTGART, DE, Bd. 84, Nr. 1, Januar 1990 (1990-01), Seiten 1-5, XP000094627 ISSN: 0030-4026

## Beschreibung

Die Erfindung betrifft ein Verfahren zur Herstellung eines strahlungsabsorbierenden optischen Elements.

Unter strahlungsabsorbierenden optischen Elementen werden im Rahmen der Erfindung sowohl teilweise absorbierende als auch zumindest nahezu vollständig absorbierende optische Elmente verstanden. Teilweise absorbierende optische Elemente werden zum Beispiel als optische Filter zur gezielten Lichtabschwächung, insbesondere als farbneutrale Filter, verwendet. Optische Elemente, die auftreffende Strahlung nahezu vollständig absorbieren, werden auch als Schwarzschichten bezeichnet und beispielsweise in der Sensorik im sichtbaren und im nahen infraroten Spektralbereich verwendet, insbesondere bei pyroelektrischen Sensoren.

Eine Möglichkeit zur Herstellung von Schwarzschichten besteht darin, eine Oberfläche mit einer stark rußenden Flamme eines organischen Gases, zum Beispiel Acetylen, zu beschichten. Die Dicke und die Gleichmäßigkeit der so erzeugten Schwarzschicht sind aber oftmals unbefriedigend. Weiterhin wird die Oberfläche stark erhitzt, was insbesondere dann nachteilig ist, wenn hinter der Oberfläche empfindliche Sensoren angeordnet sind.

Bei einem anderen Verfahren wird durch eine Verdampfung eines Metalls, z.B. Silber, in einem Grobvakuum von etwa 1,33 mbar eine Schwarzschicht aus einer porösen Metallschicht erzeugt. Allerdings weisen derartige poröse Metallschichten oftmals nur eine geringe Langzeitstabilität auf.

Weiterhin ist bekannt, dass Metallschichten durch anodische Oxidation oder plasmachemische Oxidation in schwarze oxidkeramische Schichten umgewandelt werden können. Diese zeigen aber unerwünscht hohe Reflexionswerte im nahen infraroten Spektralbereich und können nur auf metallischen oder ähnlich temperaturstabilen und chemisch beständigen Trägern erzeugt werden.

Aus der FR-A-2 592 063 ist bekannt, eine Schwarzschicht durch das Aufbringen mehrerer Schichten mit unterschiedlicher Zusammensetzung zu erzeugen. Die erste Schicht bildet dabei ein Material aus einer der Gruppen 4A oder 5A des Periodensystems der Elemente, der eine Nitridschicht und eine Carbidschicht desselben Elements nachfolgen. Die Schichtenfolge wird durch eine kohlenstoffhaltige Schicht abgeschlossen.

Die Verwendung einer Schwarzschicht als dekorative Schicht wird in der US 4,634,635 beschrieben. Hierin wird offenbart, die Oberfläche eines Ornaments mittels einem plasmaunterstützten CVD-Verfahren mit SiC zu beschichten, wobei die Oberfläche während des Beschichtungsprozesses auf hohe Temperaturen erhitzt wird. Für die Beschichtung von temperaturempfindlichen Kunststoffen ist ein derartiges Verfahren deshalb nicht geeignet.

In der DE 689 10731 T2 wird eine absorbierende Beschichtung beschrieben, die mittels Kathodenzerstäubung (Sputtern) erzeugt wird. Dabei werden beispielsweise Targets, die eine Mischung aus Oxidnitriden des Aluminiums und Titans enthalten, verwendet. Die Herstellung derartiger Targets ist allerdings aufwendig und deshalb mit erheblichen Kosten verbunden.

In der DE 102 41 708 A1 wird der Einsatz einer Plasmaionenquelle zur Erzeugung einer Brechzahlgradientenschicht, die die Grenzflächenreflexion eines Kunststoffsubstrats reduziert, beschrieben.

In der GB 2 372 044 A wird eine funktionelle Schicht beschrieben, die eine Brechzahlgradientenschicht aufweist, wobei der Brechzahlgradient durch eine räumliche Variation der Materialzusammensetzung erzielt wird.

D4 ist ein Zwischendokument und offenbart ein Verfahren zur Herstellung transparenter optischer Elemente wobei ein kunstoffhaltiges Substrat mit einem Ionen Plasmaätzprozess behandelt ist.

Der Erfindung liegt die Aufgabe zugrunde, ein verbessertes Verfahren zur Herstellung eines strahlungsabsorbierenden optischen Elements anzugeben, das sich durch einen vergleichsweise geringen Herstellungsaufwand auszeichnet und insbesondere auch auf vergleichsweise temperaturempfindliche Substrate aus Kunststoff anwendbar ist.

Diese Aufgabe wird durch ein Verfahren zur Herstellung eines strahlungsabsorbierenden Elements nach Patentanspruch 1 gelöst. Vorteilhafte Ausgestaltungen und Weiterbildungen der Erfindung sind Gegenstand der abhängigen Ansprüche.

Gemäß der Erfindung wird ein strahlungsabsorbierendes optisches Element, das ein Substrat aus einem Kunststoff enthält, dadurch hergestellt, dass auf mindestens einer Oberfläche des Substrats mittels eines Plasmaätzprozesses eine Brechzahlgradientenschicht erzeugt wird, und nachfolgend eine Metallschicht auf die Brechzahlgradientenschicht aufgebracht wird, wobei die Metallschicht eine Dicke von mindestens 200 nm aufweist.

Durch die Brechzahlgradientenschicht wird die Reflexion im Vergleich zu einer herkömmlichen Kunststoffoberfläche, die aufgrund ihrer vergleichsweise geringen Rauheit einen annähernd sprunghaften Übergang des Brechzahl zum Umgebungsmedium aufweist, vorteilhaft stark vermindert.

Die Dicke der erzeugten Brechzahlgradientenschicht, innerhalb derer die Brechzahl in der Richtung senkrecht zur Oberfläche des Substrats variiert, beträgt vorzugsweise 50 nm oder mehr, besonders bevorzugt sogar 200 nm oder mehr.

Beispielsweise kann erreicht werden, dass die Reflexion der auf dem Substrat erzeugten Brechzahlgradientenschicht im Wellenlängenbereich von 400 nm bis 1100 nm weniger als 1,5 % beträgt. Aufgrund der Rauheit der Grenzfläche tritt nahezu keine spiegelnde Reflexion auf und allenfalls ein geringer Anteil des auf die Substratoberfläche auftreffenden Lichts wird diffus reflektiert.

Betrachtet man einen Lichtstrahl, der von der Substratseite her die auf das Substrat aufgebrachte Metallschicht durchquert, muss die Summe der Transmission T, der Absorption A und der Reflexion R aufgrund der Energieerhaltung 1 ergeben, es gilt also: T + R + A = 1. Da die Reflexion R an der Grenzfläche zwischen dem Substrat und der Metallschicht durch die im ersten Verfahrensschritt erzeugte Brechzahlgradientenschicht auf einen sehr geringen Wert verkleinert werden kann, wird die Absorption A = 1 - T - R im wesentlichen von der Transmission T der Metallschicht bestimmt.

Die Transmission T der Metallschicht kann vorteilhaft durch eine Variation der Dicke der Metallschicht variiert werden. Dadurch, dass bei dem Verfahren eine Metallschicht, deren Dicke 200 nm oder mehr beträgt, aufgebracht wird, kann die Transmission T der Metallschicht auf einen gegen 1 vernachlässigbar geringen Wert vermindert werden, so dass sehr hohe Werte für die Absorption A erreicht werden können.

Insbesondere kann auf diese Weise eine Schwarzschicht hergestellt werden, die auftreffendes Licht nahezu vollständig absorbiert. Die mittlere Absorption im Wellenlängenbereich von 200 nm bis 800 nm kann vorteilhaft 98% oder mehr betragen. Im UV-Spektralbereich von 200 nm bis 380 nm kann sogar eine mittlere Absorption von mehr als 99% erzielt werden. Durch eine Variation der Dicke der Metallschicht kann die Transmission T und folglich auch die Absorption A auf nahezu beliebige Werte eingestellt werden.

Da mit modernen Beschichtungsverfahren eine hohe Reproduzierbarkeit und eine sehr gute Homogenität der Dicke der Metallschicht über die zu beschichtende Oberfläche erreicht werden kann, wird durch das erfindungsgemäße Herstellungsverfahren auch eine besonders gute Homogenität und Reproduzierbarkeit der optischen Eigenschaften des strahlungsabsorbierenden optischen Elements erreicht. Vorzugsweise erfolgt das Aufbringen der Metallschicht mittels Sputtern. Alternativ sind selbstverständlich auch andere Beschichtungsverfahren geeignet.

Die aufgebrachte Metallschicht kann insbesondere Silber, Gold oder Aluminium enthalten.

Die Brechzahlgradientenschicht an der Substratoberfläche wird vorteilhaft durch eine Aufrauung des Kunststoffsubstrats erzeugt, so dass sich die Brechzahlgradientenschicht von der Oberfläche des Substrats aus in das Substrat hinein erstreckt. Vorteilhaft erstreckt sich die Brechzahlgradientenschicht bis in eine Tiefe von 50 nm oder mehr, besonders bevorzugt sogar 200 nm oder mehr, in das Substrat hinein.

Die Erzeugung der Brechzahlgradientenschicht auf der oder den Oberflächen des Kunststoffsubstrats erfolgt mittels eines Plasmaätzprozesses. Der Plasmaätzprozess kann in einer Vakuumbedampfungsanlage, die über eine Plasmaionenquelle verfügt, durchgeführt werden. Derartige Plasmaionenquellen werden bei der Herstellung optischer Schichten üblicherweise dazu verwendet, um durch eine Substratvorbehandlung durch Ionenbeschuss und/oder einen zusätzlichen Energieeintrag durch einen Ionenbeschuss während des Beschichtungsprozesses vorteilhafte Wachstumsbedingungen zu erzielen, insbesondere um Schichten mit geringer Rauheit abzuscheiden, und um die Haftung der Schichten auf dem Substrat zu verbessern. Da Vakuumbedampfungsanlagen zur Herstellung optischer Schichten oftmals bereits über eine Plasmaionenquelle verfügen, sind in diesem Fall zum Einsatz des erfindungsgemäßen Verfahrens keine weiteren Ein- oder Umbauten notwendig.

Der Plasmaätzprozess wird bevorzugt in einem Ar-Plasma durchgeführt, wobei dem Plasma vorzugsweise Sauerstoff zugeführt wird. Besonders vorteilhaft ist es, wenn etwa 20 sccm bis 40 sccm Sauerstoff zugeführt werden. Zur Herstellung der Brechzahlgradientenschicht sollte die Energie der Ionen 100 eV oder mehr und die Dauer des Plasmaätzprozesses 200 s oder mehr betragen. Mittels des Plasmaätzprozesses kann vorteilhaft die Oberfläche des Kunststoffsubstrats derart aufgeraut werden, das sich eine Brechzahlgradientenschicht bis in eine Tiefe von 50 nm oder mehr, bevorzugt sogar 200 nm oder mehr, in das Substrat hinein erstreckt. Weitere Details des Plasmaätzprozesses können der DE 102 41 708 A1 entnommen werden, deren Inhalt hiermit durch Referenz aufgenommen wird.

Bei einer bevorzugten Variante der Erfindung wird nicht nur auf der zum Aufbringen der Metallschicht vorgesehenen Oberfläche des Kunststoffsubstrats eine Brechzahlgradientenschicht erzeugt, sondern auch auf einer gegenüberliegenden Oberfläche des Substrats. Dazu werden beispielsweise die Vorder- und die Rückseite eines Kunststoffsubstrats nacheinander mit dem Plasmaätzprozess behandelt. Auf diese Weise wird mit verhältnismäßig geringem Aufwand eine Entspiegelung der Oberfläche, die der absorbierenden Metallschicht gegenüberliegt, erzielt. Durch diese Entspiegelung wird die Absorption des optischen Elements erhöht, da ansonsten Strahlung, die bereits an der der Metallschicht gegenüberliegenden Rückseite des Substrats reflektiert wird, nicht durch das Substrat zu der nachfolgenden absorbierenden Metallschicht gelangen und dort absorbiert würde.

Besonders geeignet ist das erfindungsgemäße Verfahren für Kunststoffsubstrate, die PMMA (Polymethylmethacrylat), CR39(Diethylenglycolbisalkylcarbonat) oder andere methylmethacrylat-haltige Polymere enthalten. Da das erfindungsgemäße Verfahren vergleichsweise schnell, einfach und kostengünstig ist, und zudem eine hohe Fehlertoleranz aufweist, ist es auch für Massenbauteile geeignet.

Das erfindungsgemäße Verfahren ist insbesondere zur Herstellung von Absorbern für pyroelektrische Sensoren, oder für Absorber, die im optischen Gerätebau als Strahlfalle oder zur Absorption von Streulicht verwendet werden, geeignet.

Weiterhin ist auch eine Verwendung eines erfindungsgemäßen strahlungsabsorbierenden Elements als dekorative Schicht für Gebrauchsgegenstände, zum Beispiel als Ziffernblatt einer Uhr, denkbar. Vorteilhaft weist die aufgebrachten Metallschichten auch eine ausreichende elektrische Leitfähigkeit für verschiedene Sensoranwendungen auf.

Die Erfindung wird im folgenden anhand von Ausführungsbeispielen im Zusammenhang mit den Figuren 1 bis 5 näher erläutert.

Es zeigen:
Figuren 1A, 1B, 1C und 1D eine schematische Darstellung eines Ausführungsbeispiels eines erfindungsgemäßen Verfahrens anhand von vier Zwischenschritten,
Figur 2 eine schematische Darstellung eines Querschnitts durch ein Ausführungsbeispiel eines mit dem erfindungsgemäßen Verfahren hergestellten strahlungsabsorbierenden optischen Elements,
Figur 3 eine graphische Darstellung eines Absorptionsspektrums des mit dem erfindungsgemäßen Verfahren hergestellten strahlungsabsorbierenden optischen Elements bei dem ersten Ausführungsbeispiel,
Figur 4 eine graphische Darstellung eines Reflexionsspektrums der dem Substrat zugewandten Rückseite der Goldschicht des mit dem erfindungsgemäßen Verfahren hergestellten strahlungsabsorbierenden optischen Elements, und
Figur 5 eine graphische Darstellung eines Reflexionsspektrums der von dem Substrat abgewandten Vorderseite der Goldschicht des mit dem erfindungsgemäßen Verfahren hergestellten strahlungsabsorbierenden optischen Elements.

Gleiche oder gleichwirkende Elemente sind in den Figuren mit den gleichen Bezugszeichen versehen.

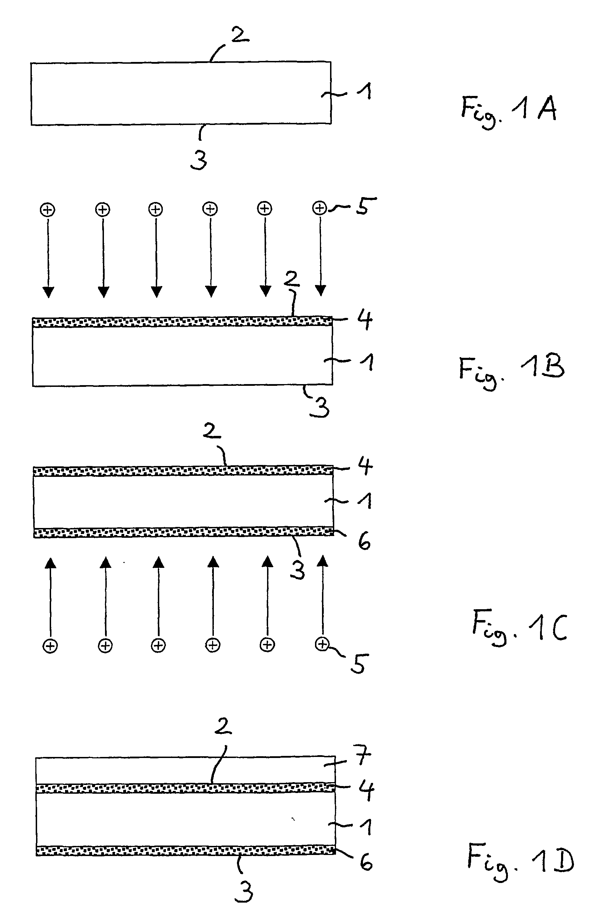

Das erfindungsgemäße Herstellungsverfahren eines strahlungsabsorbierenden optischen Elements wird zunächst anhand von den in den Figuren 1A, 1B, 1C und 1D schematisch dargestellten Zwischenschritten erläutert.

Figur 1A zeigt ein Kunststoff-Substrat 1, beispielsweise aus PMMA oder CR39, das eine vorderseitige Oberfläche 2 und eine rückseitige Oberfläche 3 aufweist. Die Oberflächenrauheiten eines derartigen Substrats liegen typischerweise im Bereich von 1 nm oder weniger und das Reflexionsvermögen gegenüber Luft beträgt etwa 4 %.

Bei dem in Figur 1B schematisch dargestellten Verfahrensschritt wird auf der vorderseitigen Oberfläche 2 des Substrats 1 mit einem Plasmaätzprozess, bei dem das Substrat 1 mit Ionen 5 beschossen wird, eine Brechzahlgradientenschicht 4 erzeugt. Zur Erzeugung der Brechzahlgradientenschicht 4 wird das Kunststoffsubstrat 1 durch den Plasmaätzprozess aufgeraut. Die an der Oberfläche 2 erzeugte Brechzahlgradientenschicht 4 erstreckt sich also von der Oberfläche 2 des Substrats 1 in das Substrat 1 hinein. Vorzugsweise erstreckt sich die Brechzahlgradientenschicht bis in eine Tiefe von 50 nm oder mehr, besonders bevorzugt sogar mehr als 200 nm oder mehr, in das Substrat hinein.

Zur Durchführung des Plasmaätzprozesses ist zum Beispiel eine Vakuumbedampfungsanlage vom Typ APS904 der Firma Leibold-Optics geeignet. Nach dem Einbau eines oder mehrerer Substrate 1 in die Anlage wird diese typischerweise auf etwa 7 * 10⁻⁶ mbar abgepumpt. Nachfolgend wird ein Argon-Plasma mit einem Druck von etwa 3 * 10⁻⁴ mbar erzeugt, dem etwa 30 sccm Sauerstoff zugeführt werden. Durch Einstellen einer Vorspannung von mindestens 100 V werden Ionen mit einer entsprechenden Energie von mindestens 100 eV zum Substrat hin beschleunigt. Nach einer Ätzdauer von beispielsweise etwa 300 s ist die Substratoberfläche 2 derart aufgeraut, dass sie eine Brechzahlgradientenschicht 4 aufweist, innerhalb derer die Brechzahl von der Oberfläche des 2 des Substrats aus bis in eine Tiefe von mehr als 200 nm variiert.

Bei einer vorteilhaften Ausgestaltung des erfindungsgemäßen Verfahrens wird, wie in Figur 1C dargestellt ist, auch auf der der vorderseitigen Oberfläche 2 gegenüberliegenden rückseitigen Oberfläche 3 mit dem zuvor beschriebenen Plasmaätzprozess eine zweite Brechzahlgradientenschicht 6 erzeugt. Dies ist vorteilhaft für Anwendungen, bei der auch die Rückseite 3 des Substrats 1 eine möglichst geringe Reflexion aufweisen soll.

Bei dem in Fig. 1D dargestellten nachfolgenden Verfahrensschritt wird auf die vorderseitige Brechzahlgradientenschicht 4 eine Metallschicht 7 aufgebracht, die beispielsweise Al, Ag oder Au enthält. Das Aufbringen der Metallschicht erfolgt bevorzugt mittels Sputtern. Abhängig von der Schichtdicke der Metallschicht können teilweise absorbierende oder nahezu vollständig absorbierende optische Elemente hergestellt werden.

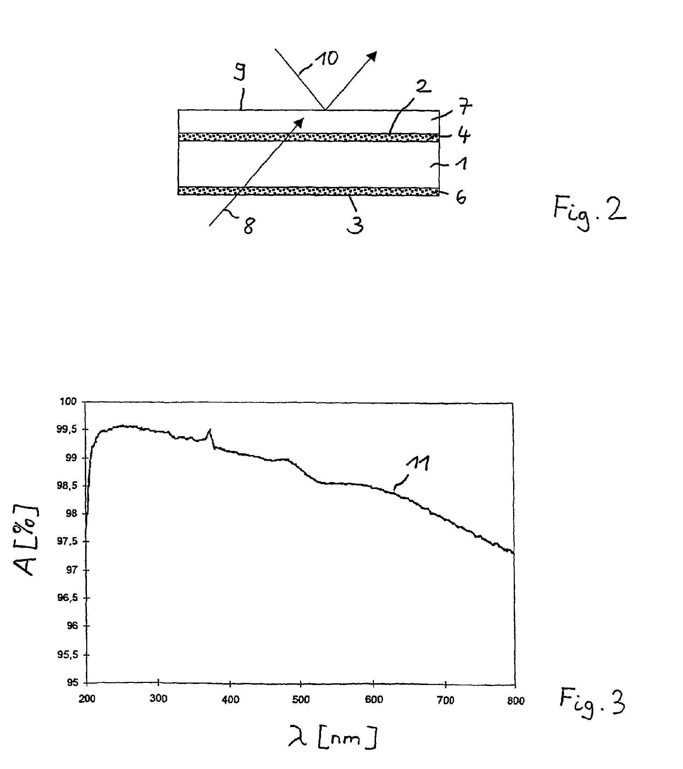

Figur 2 zeigt ein erstes Ausführungsbeispiel eines strahlungsabsorbierenden optischen Elements gemäß der Erfindung, bei dem eine etwa 200 nm dicke Goldschicht 7 auf der vorderseitigen Oberfläche 2 eines 1 mm dicken PMMA-Substrats 1 aufgebracht wurde, das sowohl auf der vorderseitigen Oberfläche 2 als auch auf der rückseitigen Oberfläche 3 Brechzahlgradientenschichten 4, 6 aufweist.

Bei diesem Ausführungsbeispiel handelt es sich um eine Schwarzschicht, die von der Substratseite her auftreffende Strahlung 8 nahezu vollständig absorbiert. Durch die mit dem Plasmaätzprozess erzeugten Brechzahlgradientenschichten 4, 6 weisen die vorderseitige Oberfläche 2 und die rückseitige Oberfläche 3 des Substrats 1 eine besonders geringe Reflexion auf. Strahlung 8, die von der Rückseite 3 des Substrats 1 auf das strahlungsabsorbierende optische Element auftrifft, wird daher an der Grenzfläche 3 zwischen einem Umgebungsmedium, beispielsweise Luft, und dem Substrat 1, und an der Grenzfläche zwischen dem Substrat 1 und der Metallschicht 7 vorteilhafterweise nur zu einem sehr geringen Anteil reflektiert. Die Strahlung dringt daher nahezu vollständig in die Goldschicht 7 ein. Da die Transmission der Goldschicht 7 aufgrund ihrer Dicke von etwa 200 nm ebenfalls äußerst gering ist, wird die Strahlung 8 in der Goldschicht 7 nahezu vollständig absorbiert. Von der Rückseite 3 des Substrats 1 aus betrachtet erscheint die Goldschicht 7 daher mattschwarz.

Die von dem Substrat 1 abgewandte Oberfläche 9 der Goldschicht 7 weist dagegen eine nicht vernachlässigbare Reflexion R auf, so dass auf die Oberfläche 9 auftreffende Strahlung 10 zumindest teilweise an der Goldschicht 7 reflektiert wird.

In Figur 3, Figur 4 und Figur 5 sind Absorptions- und Reflexionsspektren des mit dem erfindungsgemäßen Verfahren hergestellten optischen Elements in einem Wellenlängenbereich zwischen 200 nm und 800 nm dargestellt.

Das in Figur 3 dargestellte Absorptionsspektrum 11 für von der Rückseite 3 des Substrats 1 her auftreffende Strahlung 8 wurde mit einer Streulichtkugel bestimmt. Im ultravioletten Spektralbereich von 200 nm bis 380 nm beträgt die mittlere Absorption mehr als 99 %. Im gesamten Messbereich von 200 nm bis 800 nm beträgt die Absorption im Mittel 98,3 %.

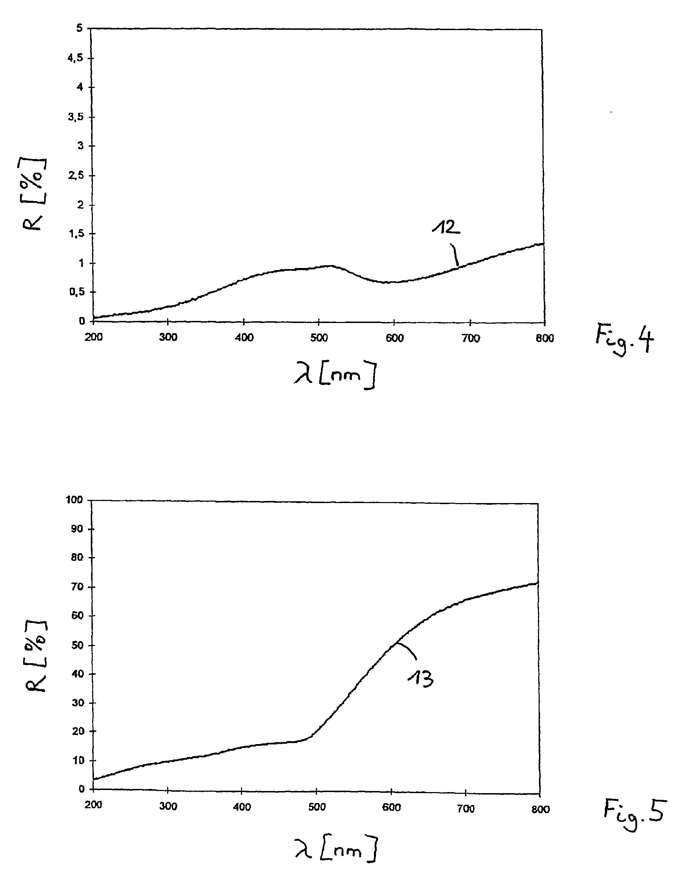

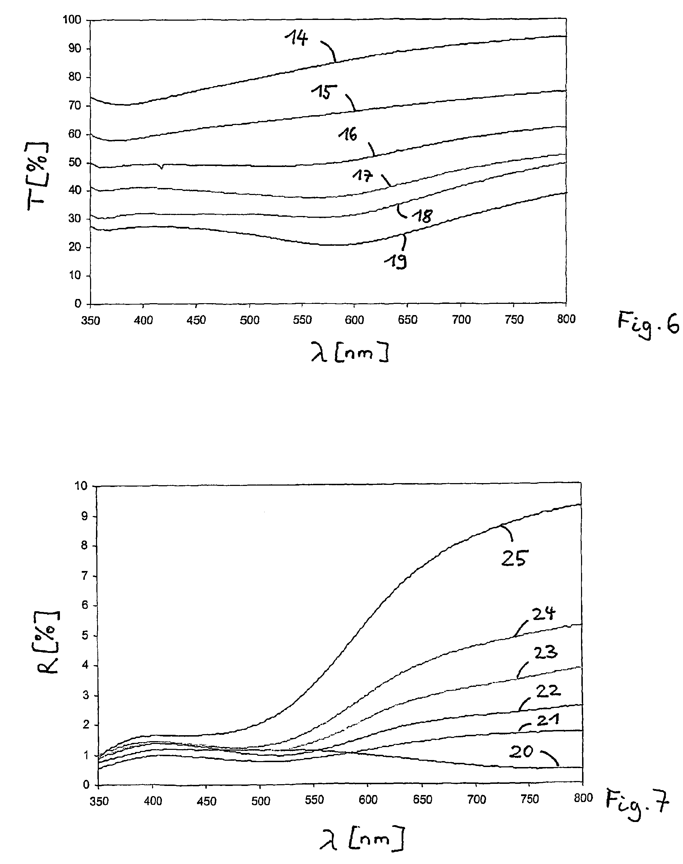

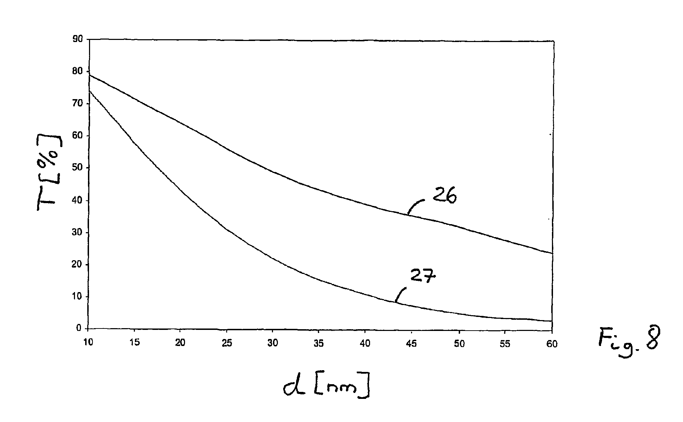

Das in Figur 4 dargestellte Reflexionsspektrum 12 der Rückseite 3, also der von der Metallschicht 7 abgewandten Seite des Substrats 1, weist im sichtbaren Spektralbereich eine mittlere Reflexion von weniger als 1 % auf.

Das in Figur 5 dargestellte Reflexionsspektrum 13 der Oberfläche 9 der 200 nm dicken Goldschicht auf der Vorderseite 2 des Substrats 1 des ersten Ausführungsbeispiels zeigt dagegen die für eine Metallschicht typische hohe Reflexion im sichtbaren Spektralbereich.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüche beinhaltet, auch wenn dieses Merkmal oder diese Kombination selbst nicht explizit in den Patentansprüchen oder Ausführungsbeispielen angegeben ist.

## Patentansprüche

1. Verfahren zur Herstellung eines strahlungsabsorbierenden optischen Elements, das ein Substrat (1) aus einem Kunststoff enthält, wobei
- auf mindestens einer Oberfläche (2) des Substrats (1) eine Brechzahlgradientenschicht (4) erzeugt wird, und
- nachfolgend eine Metallschicht (7) auf die Brechzahlgradientenschicht (4) aufgebracht wird,
**dadurch gekennzeichnet, dass**
die Brechzahlgradientenschicht mit einem Plasmaätzverfahren hergestellt wird, und die Dicke der Metallschicht 200 nm oder mehr beträgt.

2. Verfahren nach Anspruch 1,
**dadurch gekennzeichnet, dass**
sich die Brechzahlgradientenschicht (4) in das Substrat (1) hinein erstreckt.

3. Verfahren nach Anspruch 2,
**dadurch gekennzeichnet, dass**
sich die Brechzahlgradientenschicht (4) von der Oberfläche (2) des Substrats (1) aus bis in eine Tiefe von 50 nm oder mehr in das Substrat (1) hinein erstreckt.

4. Verfahren nach einem der vorhergehenden Ansprüche,
**dadurch gekennzeichnet, dass**
das Substrat (1) bei dem Plasmaätzprozess mit Ionen (5) beschossen wird, die eine Energie von 100 eV oder mehr aufweisen.

5. Verfahren nach einem der vorhergehenden Ansprüche,
**dadurch gekennzeichnet, dass**
der Plasmaätzprozess in einem Ar-Plasma durchgeführt wird und dem Plasma Sauerstoff zugeführt wird.

6. Verfahren nach einem der vorhergehenden Ansprüche
**dadurch gekennzeichnet, dass**
die Dauer des Plasmaätzprozesses 200 s oder mehr beträgt.

7. Verfahren nach einem der vorhergehenden Ansprüche,
**dadurch gekennzeichnet, dass**
die Metallschicht (7) Silber, Gold oder Aluminium enthält.

8. Verfahren nach einem der vorhergehenden Ansprüche, **dadurch gekennzeichnet, dass**
das Aufbringen der Metallschicht (7) mittels Sputtern erfolgt.

9. Verfahren nach einem der vorhergehenden Ansprüche,**dadurch gekennzeichnet, dass**
eine erste Brechzahlgradientenschicht (4) auf einer vorderseitigen Oberfläche (2) des Substrats (1) und eine zweite Brechzahlgradientenschicht (6) auf einer rückseitigen Oberfläche (3) des Substrats (1) erzeugt werden.

10. Verfahren nach einem der vorhergehenden Ansprüche,
**dadurch gekennzeichnet, dass**
das Substrat (1) PMMA oder CR39 enthält.

11. Verfahren nach einem der vorhergehenden Ansprüche,
**dadurch gekennzeichnet, dass**
die Reflexion der auf der Oberfläche (2) des Substrats (1) erzeugten Brechzahlgradientenschicht (4) im Wellenlängenbereich von einschließlich 400 nm bis einschließlich 1100 nm weniger als 1,5% beträgt.

## Claims

1. Method for producing a radiation-absorbing optical element containing a substrate (1) composed of a plastic, wherein
- a refractive index gradient layer (4) is produced on at least one surface (2) of the substrate (1) and
- a metal layer (7) is subsequently applied to the refractive index gradient layer (4),
**characterized in that**
the refractive index gradient layer is produced by means of a plasma etching method, and the thickness of the metal layer is 200 nm or more.

2. Method according to Claim 1,
**characterized in that**
the refractive index gradient layer (4) extends into the substrate (1).

3. Method according to Claim 2,
**characterized in that**
the refractive index gradient layer (4) extends from the surface (2) of the substrate (1) into the substrate (1) to a depth of 50 nm or more.

4. Method according to any of the preceding claims,
**characterized in that**
the substrate (1) is bombarded with ions (5) having an energy of 100 eV or more during the plasma etching process.

5. Method according to any of the preceding claims,
**characterized in that**
the plasma etching process is carried out in an Ar plasma and oxygen is fed to the plasma.

6. Method according to any of the preceding claims,
**characterized in that**
the duration of the plasma etching process is 200 s or more.

7. Method according to any of the preceding claims,
**characterized in that**
the metal layer (7) contains silver, gold or aluminium.

8. Method according to any of the preceding claims,
**characterized in that**
the metal layer (7) is applied by means of sputtering.

9. Method according to any of the preceding claims,
**characterized in that**
a first refractive index gradient layer (4) is produced on a front-side surface (2) of the substrate (1) and a second refractive index gradient layer (6) is produced on a rear-side surface (3) of the substrate (1).

10. Method according to any of the preceding claims,
**characterized in that**
the substrate (1) contains PMMA or CR39.

11. Method according to any of the preceding claims,
**characterized in that**
the reflection of the refractive index gradient layer (4) produced on the surface (2) of the substrate (1) in the wavelength range of 400 nm to 1100 nm inclusive is less than 1.5%.

## Revendications

1. Procédé de fabrication d'un élément optique absorbant le rayonnement, l'élément optique contenant un substrat (1) en matière synthétique, et dans lequel
une couche (4) à gradient d'indice de réfraction est formée sur au moins une surface (2) du substrat (1) et
une couche métallique (7) est ensuite appliquée sur la couche (4) à gradient d'indice de réfraction, **caractérisé en ce que**
la couche à gradient de réfraction est réalisée à l'aide d'une opération de gravure au plasma, l'épaisseur de la couche métallique étant de 200 nm ou plus.

2. Procédé selon la revendication 1, **caractérisé en ce que** la couche (4) à gradient d'indice de réfraction s'étend à l'intérieur du substrat (1).

3. Procédé selon la revendication 2, **caractérisé en ce que** la couche (4) à gradient d'indice de réfraction s'étend dans le substrat (1) jusqu'à une profondeur de 50 nm ou plus depuis la surface (2) du substrat (1).

4. Procédé selon l'une des revendications précédentes, **caractérisé en ce que** dans l'opération de gravure au plasma, le substrat (1) est bombardé par des ions (5) dont l'énergie est de 100 eV ou davantage.

5. Procédé selon l'une des revendications précédentes, **caractérisé en ce que** l'opération de gravure au plasma est réalisée dans un plasma à l'Ar, de l'oxygène étant ajouté au plasma.

6. Procédé selon l'une des revendications précédentes, **caractérisé en ce que** la durée de l'opération de gravure au plasma est de 200 s ou plus.

7. Procédé selon l'une des revendications précédentes, **caractérisé en ce que** la couche métallique (7) contient de l'argent, de l'or ou de l'aluminium.

8. Procédé selon l'une des revendications précédentes, **caractérisé en ce que** l'application de la couche métallique (7) s'effectue par pulvérisation.

9. Procédé selon l'une des revendications précédentes, **caractérisé en ce qu'**une première couche (4) à gradient d'indice de réfraction est formée sur une surface avant (2) du substrat (1) et une deuxième couche (6) à gradient d'indice de réfraction est formée sur une surface arrière (3) du substrat (1).

10. Procédé selon l'une des revendications précédentes, **caractérisé en ce que** le substrat (1) contient du PMMA ou du CR39.

11. Procédé selon l'une des revendications précédentes, **caractérisé en ce que** la réflexion de la couche (4) à gradient d'indice de réfraction formée sur la surface (2) du substrat (1) dans la plage de longueurs d'ondes allant de 400 nm inclus à 1100 nm inclus est inférieure à 1,5 %.
